# EUROPÄISCHE PATENTANMELDUNG

(11) **EP 2 083 607 A1**
(43) Veröffentlichungstag der Anmeldung: **29.07.2009**
(21) Anmeldenummer: 08290060.6
(22) Anmeldetag: 23.01.2008
(51) Int. Cl.: H05B 3/50, H05B 3/14, B60H 1/22, F24H 3/04

(54) **Vorrichtung zum Heizen insbesondere eines Kraftfahrzeuges**

(71) Anmelder: Behr France Rouffach SAS, 68250 Rouffach (FR)
(72) Erfinder: Denny, Geoffrey, 68170 Rixheim (FR); Miss, Pascal, 67600 Sélestat (FR)
(74) Vertreter: Grauel, Andreas

(57) **Zusammenfassung**

Die Erfindung betrifft eine Vorrichtung (1) zum Heizen insbesondere eines Kraftfahrzeuges mit einer elektrischen Heizeinrichtung (7,8,9,10), welche zwei um einen Zwischenraum (14) beabstandete Kontaktbleche (12,13) aufweist, und bei welcher in dem Zwischenraum ein PTC-Element (15) angeordnet ist, welches die beiden Kontaktbleche (12,13) elektrisch miteinander verbinden kann, wobei sich die Heizvorrichtung dadurch auszeichnet, dass in dem Zwischenraum axial neben dem PTC-Element (15) ein Abstandhalter (19) für die beiden Kontaktbleche (12,13) angeordnet ist, wodurch die Gefahr verringert ist, dass zwei unterschiedlich gepolte Kontaktbleche (12,13) unmittelbar elektrisch miteinander in Kontakt treten können.

## Beschreibung

Die Erfindung betrifft eine Vorrichtung zum Heizen insbesondere eines Kraftfahrzeuges mit einer elektrischen Heizeinrichtung, welche zwei um einen Zwischenraum beabstandete Kontaktbleche aufweist, und bei welcher in dem Zwischenraum ein PTC-Element angeordnet ist, welches die beiden Kontaktbleche elektrisch miteinander verbinden kann.

Gattungsgemäße Heizvorrichtungen sind aus dem Stand der Technik gut bekannt und werden häufig als Zusatzheizungen eingesetzt, um gezielt Bereiche einer Fahrgastzelle, wie beispielsweise einen Fußbereich, heizen zu können. Beispielsweise ist in der EP 1 523 225 A1 eine Heizanordnung mit mindestens einem PTC-Element, insbesondere für ein Kraftfahrzeug, beschrieben, bei welchem das PTC-Element zwischen Kontaktblechen angeordnet ist, welche der elektrischen Anbindung dienen, wobei die Kontaktbleche und das PTC-Element mittels eines Klebstoffes verbunden sind. Um den elektrischen Kontakt zwischen den Komponenten Kontaktbleche und PTC-Element zu verbessern, weist die Anordnung einen Klebstoff mit einem spezifischen elektrischen Widerstand auf, der derart gewählt ist, dass unter anderem ein elektrischer Kurzschluss zwischen elektrisch unterschiedlich gepolten Kontaktblechen vermieden werden kann.

Es ist Aufgabe vorliegender Erfindung gattungsgemäße Heizvorrichtungen weiter zu entwickeln.

Die Aufgabe der Erfindung wird von einer Vorrichtung zum Heizen insbesondere eines Kraftfahrzeuges mit einer elektrischen Heizeinrichtung, welche zwei um einen Zwischenraum beabstandete Kontaktbleche aufweist, und bei welcher in dem Zwischenraum ein PTC-Element angeordnet ist, welches die beiden Kontaktbleche elektrisch miteinander verbinden kann, gelöst, wobei sich die Heizvorrichtung dadurch auszeichnet, dass in dem Zwischenraum axial neben dem PTC-Element ein Abstandhalter für die beiden Kontaktbleche angeordnet ist.

Vorteilhafter Weise wird mit einem solchen Abstandhalter vermieden, dass insbesondere zwei elektrisch unterschiedlich gepolte Kontaktbleche, welche Im Wesentlichen zur elektrischen Versorgung des PTC-Elementes dienen, in Bereichen des Zwischenraums aneinander stoßen können, in welchen sich das PTC-Element nicht erstreckt.

Ein solcher unerwünschter Kontakt kann beispielsweise seine Ursache darin finden, dass bei der Montage der Heizvorrichtung eines der Kontaktbleche oder beide Kontaktbleche derart verbogen werden, dass ein unmittelbarer elektrischer Kontakt zwischen ihnen zustande kommen kann. Hierbei reicht schon das Unterschreiten eines kritischen Abstandes der beiden betroffenen Kontaktbleche zueinander aus.

Durch den vorliegenden Abstandhalter ist die Gefahr eines Kurzschlusses zweier unterschiedlich gepolter Kontaktbleche nahezu ausgeschlossen, da zwischen den beiden elektrisch unterschiedlich gepolten Kontaktblechen entweder das PTC-Element oder der Abstandhalter angeordnet sind.

Da elektrische Heizeinrichtungen mit PTC-Elementen hinsichtlich ihres Aufbaus und ihrer Funktion aus dem Stand der Technik gut bekannt sind, wird an dieser Stelle hierauf nur insofern eingegangen, dass an der vorliegenden Heizvorrichtung eine mit einem PTC-Element ausgerüstete Heizeinrichtung die einzige Wärmequelle darstellen oder aber die so ausgerüstete Heizeinrichtung lediglich eine zusätzliche Wärmequelle der Heizvorrichtung darstellen kann, beispielsweise neben einer Wärmequelle mit Heizrohren, in welchen ein erhitztes Kühlmittel strömen kann.

Die Kontaktbleche können vorliegend aus einem Aluminium und/oder einer Legierung hiervon hergestellt sein, wobei das PTC-Element mit einem Klebstoff in bekannter Weise in dem Zwischenraum eingeklebt sein kann.

Der Begriff "Zwischenraum" kennzeichnet vorliegend einen Bereich zwischen zwei elektrisch unterschiedlich gepolten Kontaktblechen, die unmittelbar nebeneinander angeordnet sind.

Dieser Zwischenraum ist nicht mit einem Zwischenbereich zwischen zwei Kontaktblechen zu verwechseln, in welchem die Heizvorrichtung Rippeneinrichtungen aufweist, welche jeweils zwischen zwei elektrisch gleich gepolten Kontaktblechen angeordnet sind. Die Rippeneinrichtungen dienen insbesondere der besseren Wärmeabgabe hinsichtlich der Heizeinrichtung.

Eine besonders vorteilhafte Ausführungsvariante sieht vor, dass der Abstandhalter eine Positioniereinrichtung eines Rahmenteils eines Gehäuses der Heizvorrichtung aufweist. Ist der Abstandhalter beispielsweise von einer Positioniereinrichtung eines Rahmens der Heizvorrichtung gebildet, kann der Abstandhalter baulich einfach, verliersicher und damit besonders montagefreundlich bereit gestellt werden. Oftmals ist ein Rahmen eines Gehäuses zweigeteilt und zwei Rahmenteile werden seitlich auf die Heizvorrichtung aufgesteckt. Geschieht dieses Aufstecken aus einer Richtung, welche fluchtend mit den Zwischenräumen, in welchen die PTC-Elemente angeordnet sind, ist, kann der Abstandhalter besonders einfach in einen Zwischenraum über eine Öffnung am Ende des Zwischenraums eingesteckt werden, wobei der Abstandhalter vorteilhafter Weise gleichzeitig das Rahmenteil gegenüber der Heizvorrichtung positionieren kann. Der Abstandhalter kann hierbei entweder axial oder radial in den Zwischenraum eingebracht werden.

In diesem Zusammenhang sieht eine baulich bevorzugte Ausführungsvariante vor, dass die Positioniereinrichtung beidseits an einem Ende eines der Kontaktbleche angeordnet ist. Die Positioniereinrichtung kann hierbei ein Ende eines Kontaktbleches, beispielsweise mittels des Abstandhalters und weiteren Positionierstegen, zumindest von zwei Seiten umgeben, so dass die Gefahr verringert ist, dass das Kontaktblech zu einer der Seiten wegknicken kann. Sollte dies der Fall sein, kann eine Montage eines der Rahmenteile nicht erfolgen. In einem solchen Fall muss das weggeknickte Kontaktblech vor einer weiteren Montage erst wieder gerade gebogen werden.

Eine Montage kann weiter vereinfacht werden, wenn der Abstandhalter der Positioniereinrichtung länger ausgebildet ist als Positionierstege der Positioniereinrichtung. Durch den länger ausgebildeten Abstandhalter kann ein Rahmenteil bzw. die Positioniereinrichtung besonders betriebssicher an der Heizvorrichtung ausgerichtet und montiert werden.

Damit ein Kontaktblech zwischen dem Abstandhalter und einem Positioniersteg vorteilhaft eingeführt und insbesondere Toleranzen zwischen mehreren Kontaktblechen ausgeglichen werden können, ist es vorteilhaft, wenn zwischen dem Abstandhalter und einem Positioniersteg ein Abstand vorhanden ist, der kleiner als eine doppelte Kontaktblechdicke ist.

Es versteht sich, dass der Abstandhalter unterschiedlich dick ausgebildet sein kann, solange seine Abstandhalterdicke kleiner gewählt ist als eine PTC-Elementdicke, so dass der Abstandhalter immer problemlos in den für ihn vorgesehenen Zwischenraum eingesteckt werden kann.

Die Abstandhalterdicke wird hierbei vorzugsweise quer zu einer Axialebene gemessen, in welcher sich beispielsweise ein PTC-Element axial wie auch radial erstreckt. Ähnlich verhält es sich bei der Bestimmung der Kontaktblechdicke, wenn sich das Kontaktblech zumindest fluchtend zu der Axialebene erstreckt.

Um einen Kurzschluss zweier elektrischer Kontaktbleche einer Heizeinrichtung besonders gut mittels des Abstandhalters unterbinden zu können, ist es vorteilhaft, wenn der Abstandhalter einen dauerhaften Isolator aufweist.

Es versteht sich, dass der Abstandhalter hierzu aus einer Vielzahl an gut isolierenden Materialien hergestellt sein kann. Besonders vorteilhaft, ist es, wenn der Abstandhalter aus Polypropylen PP oder aus einem Polyamid, wie etwa PA 6.6, hergestellt ist. Insbesondere kann der Abstandhalter hierbei einstückig mit einem Rahmenteil hergestellt werden, da Rahmenteile oftmals aus einem solchen Material bestehen. Damit ist der Abstandhalter verliersicher zur Montage bereit gestellt.

Da ein PTC-Element oftmals beabstandet von einer Öffnung des Zwischenraums und am Ende des Zwischenraums in dem Zwischenraum angeordnet bzw. eingeklebt sein kann, ist es vorteilhaft, wenn jeweils ein Abstandhalter an einem der beiden Enden des Zwischenraums angeordnet ist. Hierdurch ist die Gefahr verringert, dass an einem der beiden Enden des Zwischenraums bzw. der den Zwischenraum begrenzenden Kontaktbleche ein Kurzschluss zwischen zwei elektrisch unterschiedlich gepolten Kontaktblechen zustande kommen kann.

Um zwei Kontaktbleche an ihren Enden besonders betriebssicher voneinander beabstandet halten zu können, ist es vorteilhaft, wenn der Abstandhalter mehr als 10 mm in den Zwischenraum hinein ragt.

Je nach dem wie nahe ein PTC-Element an eine Öffnung eines Zwischenraumes bzw. an Enden der Kontaktbleche heran reicht, sieht eine weitere vorteilhafte Ausführungsvariante vor, dass der Abstandhalter weniger als 2 mm in den Zwischenraum hinein ragt. Bereits durch ein derart geringes Hineinragen des Abstandhalters in den Zwischenraum kann vermieden werden, dass die sich gegenüber liegenden Kontaktbleche unerwünscht bzw. kritisch aneinander geraten.

Weitere Vorteile, Ziele und Eigenschaften vorliegender Erfindung werden anhand nachfolgender Beschreibung anliegender Zeichnung erläutert, in welcher beispielhaft eine Heizvorrichtung mit verschieden ausgebildeten Abstandhaltem dargestellt ist. Komponenten, welche in den Figuren wenigstens im Wesentlichen hinsichtlich ihrer Funktion übereinstimmen, sind hierbei mit gleichen Bezugsziffern gekennzeichnet und die Komponenten können nicht in allen Figuren beziffert und/oder erläutert sein.

Es zeigt
- Figur 1: schematisch eine Ansicht einer Heizvorrichtung mit einer Heizeinrichtung aus im Wesentlichen zwei Kontaktblechen und einem dazwischen angeordneten PTC-Element,
- Figur 2: schematisch eine Detailansicht eines ersten Randbereiches der Heizvorrichtung mit einem Rahmenteil, welches Abstandhalter umfassende Positioniereinrichtungen aufweist,
- Figur 3: schematisch eine Detailansicht des ersten Randbereiches der Heizvorrichtung mit einem weiteren Rahmenteil, welches Abstandhalter umfassende alternativ ausgebildete Positioniereinrichtungen aufweist,
- Figur 4: schematisch eine perspektivische Ansicht auf die Heizvorrichtung mit den alternativ ausgebildeten Positioniereinrichtungen der Figur 3,
- Figur 5: schematisch eine Schnittansicht eines Querschnittes entlang der Schnittlinie A-A aus der Figur 3 der Heizvorrichtung mit den alternativ ausgebildeten Positioniereinrichtungen der Figuren 3 und 4, und
- Figur 6: schematisch eine Schnittansicht eines Querschnittes durch das Rahmenteil der Figuren 3 bis 5.

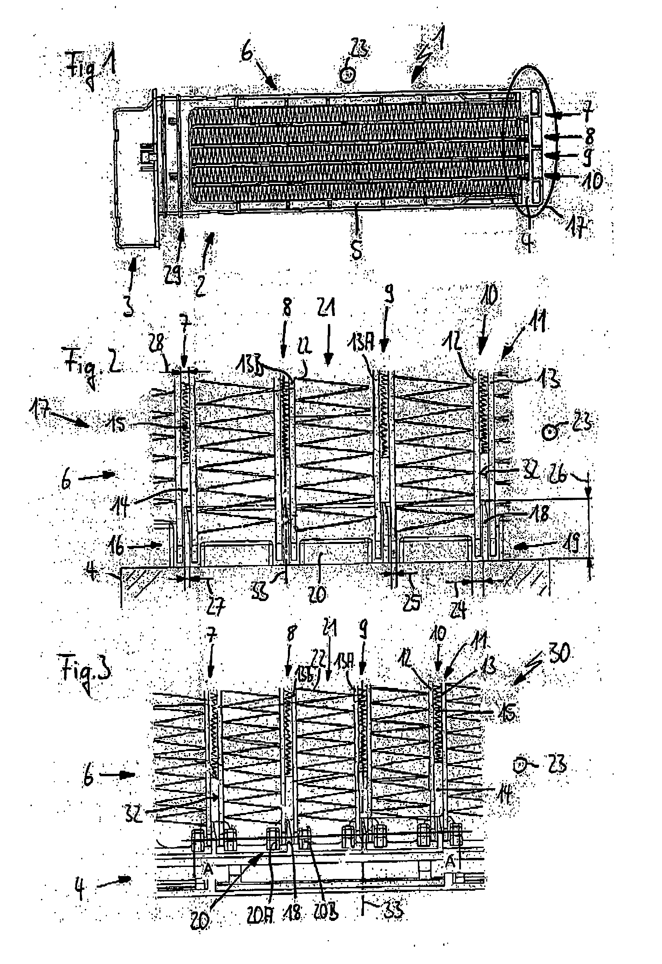

Die in der Figur 1 gezeigte Heizvorrichtung 1 weist ein Gehäuse 2 mit einem elektrischen Anschlussmodul 3 auf. Das Gehäuse 2 besteht in diesem Ausführungsbeispiel aus einem ersten Rahmenteil 4 und einem zweiten Rahmenteil 5, welche gemeinsam einen Heizblock 6 der Heizvorrichtung 1 umranden.

Als einzige Wärmequellen weist die Heizvorrichtung 1 in dem Heizblock 6 insgesamt vier Heizeinrichtungen 7, 8, 9, 10 auf, die jeweils ein Kontaktblechpaar 11 (hier nur exemplarisch beziffert, siehe Figur 2) aus einem ersten Kontaktblech 12 und einem zweiten Kontaktblech 13 aufweisen. Die beiden Kontaktbleche 12 und 13 sind unterschiedlich gepolt, wobei das erste Kontaktblech 12 positiv und das zweite Kontaktblech 13 der Heizeinrichtungen 7, 8, 9 und 10 negativ gepolt ist.

Jedes Kontaktblechpaar 11 bildet einen Zwischenraum 14, in welchem jeweils ein PTC-Element 15 eingeklebt ist. Mittels des PTC-Elements 15 kann ein elektrischer Kontakt zwischen den beiden Kontaktblechen 12 und 13 hergestellt werden, wobei die Kontaktbleche 12, 13 als elektrische Zuleiter für das PTC-Element 15 dienen. Der elektrische Widerstand des PTC-Elements 15 variiert in Abhängigkeit von der Temperatur an der jeweiligen Heizeinrichtung 7, 8, 9 und 10.

Das jeweilige PTC-Element 15 reicht nicht bis ganz an das Ende 16 des jeweiligen Zwischenraums 14 bzw. der jeweiligen Kontaktbleche 12 bzw. 13, so dass sich die Kontaktbleche 12 und 13 im Bereich des Endes 16 nicht berühren und der Zwischenraum 14 dort unausgefüllt ist, wie gut in dem Detailausschnitt 17 insbesondere nach der Figur 2 zu erkennen ist.

Da an einem so gestalteten Ende 16 die Gefahr besteht, dass die Kontaktbleche 12 und 13, beispielsweise durch falsche Handhabung etwa bei einem Zusammenbau der Heizvorrichtung 1, derart verbiegen, dass sie sich kritisch nahe kommen können, wodurch ein Kurzschluss entstehen kann, ist vorteilhafter Weise am Ende 16 der Kontaktbleche 12 bzw. 13 in dem Zwischenraum 14 jeweils ein Abstandhalter 18 eingebracht.

Der Abstandhalter 18 verhindert hierbei zuverlässig, dass die beiden elektrisch unterschiedlich gepolten Kontaktbleche 12 und 13 aneinander stoßen und hierbei einen Kurzschluss verursachen können, wodurch ungünstigen falls die betroffene Heizeinrichtung 7, 8, 9 oder 10 vollständig ausfallen kann.

Weiter ist der Abstandhalter 18 in diesem Ausführungsbeispiel aus einem Polyamid PA 6.6 hergestellt, so dass er zugleich als ein dauerhafter Isolator ausgebildet ist, wodurch der Abstandhalter 18 problemlos mit einem der beiden Kontaktbleche 12 oder 13 oder mit beiden Kontaktblechen 12, 13 in Berührung stehen kann.

In diesem Ausführungsbeispiel ist der Abstandhalter 18 zudem einerseits einstückig mit dem ersten Rahmenteil 4 und andererseits als eine Komponente einer Positioniereinrichtung 19 mit Positionierstegen 20 (hier nur exemplarisch beziffert) einstückig gestaltet. Einstückig bedeutet hierbei, dass sowohl der Abstandhalter 18, das Rahmenteil 4 als auch die Positioniereinrichtung 19 mit seinen Positionierstegen 20 aus dem gleichen Werkstoff, nämlich aus PA 6.6 gespritzt sind. Hierdurch ist der Abstandhalter 18 verliersicher in dem Rahmenteil 4 integriert.

Die Positionierstege 20 können unterschiedlich lang ausgebildet sein, beispielsweise um der Heizeinrichtung 1 in Seitenbereichen mehr Stabilität verleihen zu können. Die Positionierstege 20 der Positioniereinrichtung 19 greifen hierbei jeweils in einen Zwischenbereich 21 ein, der zwischen denjenigen der Kontaktbleche 12, 13 angeordnet ist, welche unmittelbar benachbart und elektrisch gleich gepolt sind. In diesem Zwischenbereich 21 erstrecken sich von einem ersten gleichgepolten Kontaktblech 13A zu einem weiteren gleichgepolten Kontaktblech 13B auch Rippeneinrichtungen 22 (hier nur exemplarisch beziffert) der Heizvorrichtung 1, die von den Heizeinrichtungen 7, 8, 9 und/oder 10 erwärmt und von einer Umgebungsluft, beispielsweise in Strömungsrichtung 23, durchströmt werden können. Hierbei kann die Umgebungsluft Wärme insbesondere aus den Rippeneinrichtungen 22 aufnehmen und sich erwärmen.

Damit die Kontaktbleche 12, 13 baulich problemlos jeweils zwischen einem Positioniersteg 20 und einem Abstandhalter 18 Platz finden, sind die Abstandhalter 18 von den Positionierstegen 20 um einen Abstand 24 entfernt angeordnet, wobei der Abstand 24 in diesem Ausführungsbeispiel kleiner als die doppelte Kontaktblechdicke 25 gestaltet ist. Hierdurch können die Maße insbesondere der Positioniereinrichtungen 19 sehr kompakt gehalten werden, wobei gleichzeitig genügend Raum für ein sicheres und problemloses Einführen der Kontaktbleche 12, 13 in den Abstand 24 vorhanden ist.

Darüber hinaus wurde in diesem Ausführungsbeispiel hinsichtlich der Abstandhalter eine Länge 26 von 20 mm vorgesehen, so dass die Abstandhalter 18 einerseits länger ausgebildet sind als einer der Positionierstege 20 und andererseits nahezu immer gewährleistet werden kann, dass die Abstandhalter 18 um mehr als 10 mm in den Zwischenraum 14 hinein ragen.

Des Weiteren ist die Abstandhalterdicke 27 der Abstandhalter 18 kleiner gewählt als die PTC-Elementdicke 28, so dass gewährleistet ist, dass die Kontaktbleche 12, 13 auf Grund der PTC-Elementdicke 28 immer einen Abstand 24 zueinander aufweisen, der größer ist, als der Abstandhalter 18 dick ist.

Auch wenn die Heizvorrichtung 1 im Detail nur im Bereich des Detailausschnittes 17 erläutert wurde, sei an dieser Stelle der Vollständigkeit halber noch erwähnt, dass die dem betrachteten Detailausschnitt 17 gegenüber liegende Seite 29 (siehe Figur 1) der Heizeinrichtung 1 identisch oder zumindest ähnlich insbesondere hinsichtlich der Abstandhalter 18 gestaltet sein kann.

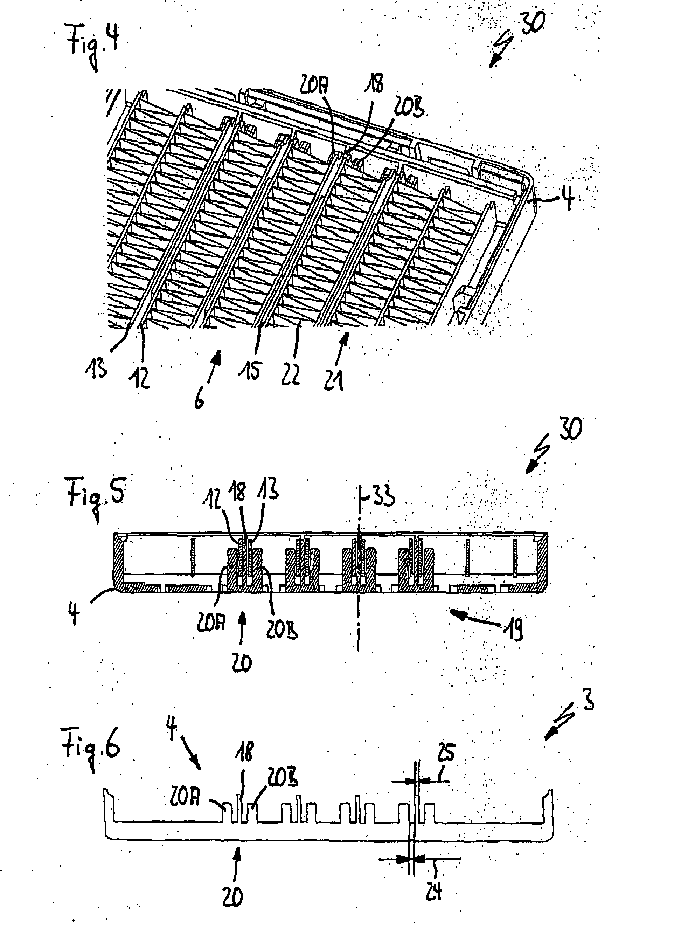

Der in den Figuren 3 bis 6 gezeigte weitere Detailausschnitt 30 eines weiteren Ausführungsbeispiels zeigt einen Heizblock 6, der im Wesentlichen mit dem der vorstehend erläuterten Heizvorrichtung 1 übereinstimmt. So umfasst der Heizblock 6 nach dem weiteren Detailausschnitt 30 insgesamt vier Heizeinrichtungen 7, 8, 9 und 10, die jeweils ein PTC-Element 15 aufweisen, welches jeweils in einem Zwischenraum 14 zwischen zwei Kontaktblechen 12 und 13 eingeklebt ist. Zwischen zwei gleichgepolten Kontaktblechen 13A und 13B sind auch hier wieder Rippeneinrichtungen 22 vorgesehen.

Abweichend zur Heizeinrichtung 1 ist jedoch das erste Rahmenteil 4 gestaltet, insbesondere hinsichtlich seiner Positioniereinrichtungen 19. Neben dem jeweiligen Abstandhalter 18, der einem Kontaktblechpaar 11 zugeordnet ist, ist jedem dieser Kontaktblechpaare 11 ein eigenes Positionierstegpaar 31 mit einem ersten Positioniersteg 20A und einem zweiten Positioniersteg 20B zugeordnet. Somit sind in einem Zwischenbereich 21 zwischen zwei elektrisch gleichgepolten Kontaktblechen 13A und 13B auch zwei Positionierstege 20A und 20B angeordnet.

Durch die beiden Positionierstege 20A und 20B wird ein Kontaktblech 12 bzw. 13 im Zusammenhang mit einem Abstandhalter 18 besonders gut umschlossen.

Es versteht sich, dass die hier beschriebenen Ausführungsbeispiele lediglich einen ersten Eindruck über Gestaltungsmöglichkeiten geben und nicht einschränkend bezüglich der vorliegenden Erfindung zu verstehen sind.

Wesentlich für die vorliegende Erfindung ist es, dass die Abstandhalter 18 immer in einem mittels eines PTC-Elementes 15 unverbauten Bereich 32 des jeweiligen Zwischenraums 14 axial neben dem jeweiligen PTC-Element 15 angeordnet sind, um hierdurch einen unmittelbaren Kontakt zwischen den beiden elektrisch unterschiedlich gepolten Kontaktblechen 12 und 13 der Heizeinrichtungen 7, 8, 9 und/oder 10 zu vermeiden.

Der Begriff "axial neben" beschreibt hierbei eine Position des jeweiligen Abstandhalters 18, welche sich hinsichtlich einer Axialebene 33 des PTC-Elementes 15 bzw. des zugehörigen Zwischenraumes 14 in dieser Axialebene 33 axial neben dem PTC-Element 15 befindet.

## Patentansprüche

1. Vorrichtung (1) zum Heizen insbesondere eines Kraftfahrzeuges mit einer elektrischen Heizeinrichtung (7, 8, 9, 10), welche zwei um einen Zwischenraum (14) beabstandete Kontaktbleche (12, 13) aufweist, und bei welcher in dem Zwischenraum (14) ein PTC-Element (15) angeordnet ist, welches die beiden Kontaktbleche (12, 13) elektrisch miteinander verbinden kann, ***dadurch gekennzeichnet, dass*** in dem Zwischenraum (14) axial neben dem PTC-Element (15) ein Abstandhalter (18) für die beiden Kontaktbleche (12, 13) angeordnet ist.

2. Heizvorrichtung (1) nach Anspruch 1, ***dadurch gekennzeichnet, dass*** der Abstandhalter (18) eine Positioniereinrichtung (19) eines Rahmenteils (4, 5) eines Gehäuses (2) der Heizvorrichtung (1) aufweist.

3. Heizvorrichtung (1) nach Anspruch 2, ***dadurch gekennzeichnet, dass*** die Positioniereinrichtung (19) beidseits an zumindest einem Ende (16) eines der Kontaktbleche (12, 13) angeordnet ist.

4. Heizvorrichtung (1) nach einem der vorhergehenden Ansprüche, ***dadurch gekennzeichnet, dass*** der Abstandhalter (18) der Positioniereinrichtung (19) länger ausgebildet ist als Positionierstege (20) der Positioniereinrichtung (19).

5. Heizvorrichtung (1) nach einem der vorhergehenden Ansprüche, ***dadurch gekennzeichnet, dass*** zwischen dem Abstandhalter (18) und einem Positioniersteg (20) der Positioniereinrichtung (19) ein Abstand (24) vorgesehen ist, der kleiner als eine doppelte Kontaktblechdicke (25) ist.

6. Heizvorrichtung (1) nach einem der vorhergehenden Ansprüche, ***dadurch gekennzeichnet, dass*** der Abstandhalter (18) eine Abstandhalterdicke (27) aufweist, welche kleiner gewählt ist als eine PTC-Elementdicke (28).

7. Heizvorrichtung (1) nach einem der vorhergehenden Ansprüche, ***dadurch gekennzeichnet, dass*** der Abstandhalter (18) einen dauerhaften Isolator aufweist.

8. Heizvorrichtung (1) nach einem der vorhergehenden Ansprüche, ***dadurch gekennzeichnet, dass*** der Abstandhalter (18) aus Polypropylen PP oder aus einem Polyamid, wie etwa PA 6.6, hergestellt ist.

9. Heizvorrichtung (1) nach einem der vorhergehenden Ansprüche, ***dadurch gekennzeichnet, dass*** jeweils ein Abstandhalter (18) zumindest an einem (16) der beiden Enden des Zwischenraums (14) angeordnet ist.

10. Heizvorrichtung (1) nach einem der vorhergehenden Ansprüche, ***dadurch gekennzeichnet, dass*** der Abstandhalter (18) mehr als 10 mm in den Zwischenraum (14) hinein ragt.

11. Heizvorrichtung (1) nach einem der vorhergehenden Ansprüche, ***dadurch gekennzeichnet, dass*** der Abstandhalter (18) weniger als 2 mm in den Zwischenraum (14) hinein ragt.

12. Heizvorrichtung (1) nach einem der vorhergehenden Ansprüche, ***gekennzeichnet durch*** Rippeneinrichtungen (22), welche jeweils zwischen zwei elektrisch gleich gepolten Kontaktblechen (13A, 13B) angeordnet sind.
